# EUROPÄISCHE PATENTANMELDUNG

(11) **EP 3 513 855 A1**
(43) Veröffentlichungstag der Anmeldung: **24.07.2019**
(21) Anmeldenummer: 19152208.5
(22) Anmeldetag: 17.01.2019
(51) Int. Cl.: B01D 19/00

(54) **GASABSCHEIDER FUER MIT EINEM FILTER**

(30) Priorität: 18.01.2018 DE 102018101087
(71) Anmelder: Vaillant GmbH, 42859 Remscheid (DE)
(72) Erfinder: Rouxel, Jean-François, F-44260 La Chapelle Launay (FR); Legrand, Norbert, 44521 Oudon (FR)
(74) Vertreter: Popp, Carsten

(57) **Zusammenfassung**

Die Erfindung betrifft einen Gasabscheider für Wärmeträgerkreisläufe in Heizgeräten. Erfindungsgemäß ist in Strömungsrichtung hinter dem Flüssigkeitseinlauf 10 eine erste Teilkammer 2 mit einem Sieb 7 vorgesehen. In Strömungsrichtung horizontal unmittelbar hinter der ersten Teilkammer 2 eine zweite Teilkammer 3 mit horizontalem Trennsteg 6 vorgesehen, der die zweite Teilkammer 3 in eine obere Teilkammer 4 mit Gasauslass 12 und eine untere Teilkammer 5 mit Flüssigkeitsablauf 11 teilt.

## Beschreibung

Die Erfindung betrifft einen Gasabscheider für Wärmeträgerkreisläufe in Heizgeräten.

In Heizgeräten zur Beheizung von Gebäuden und zur Bereitstellung von Warmwasser wird als Wärmeträger Wasser verwendet, das von einer Wärmequelle beheizt wird und in einem Kreislauf von einer Umwälzpumpe zu der Wärmesenke gefördert wird. Dabei können sich Gasblasen von der Flüssigkeit abtrennen, die die Funktionen stören.

Zur Abscheidung solcher Gasblasen ist es aus der Offenlegungsschrift DE 2016 201 254 A1 bekannt, einen Gasabscheider mit einer Verzögerungsstrecke, in der sich Gasblasen abscheiden, aufzubauen. Der Flüssigkeitsstrom wird danach nach unten abgelenkt. Ein optional gelochtes Leitblech trennt einen Totraum im oberen Bereich des Gasabscheiders ab, aus dem das Gas abgeleitet werden kann.

Die aus dem Stand der Technik bekannte Lösung hat den Nachteil eines aufwändigen Aufbaus. Zudem lässt sich der Gasabscheider nicht an verschiedene Randbedingungen wie unterschiedliche Volumenströme oder Druckverhältnisse anpassen.

Es ist daher Aufgabe der Erfindung, einen einfach aufgebauten und skalierbaren Gasabscheider bereitzustellen.

Diese Aufgabe wird gemäß den Merkmalen des Anspruchs 1 dadurch gelöst, dass die zu entgasende Flüssigkeit zunächst ohne Verwendung eines Drallgebers in eine erste bevorzugt zylinderförmigen oder prismatische Teilkammer einströmt. Am Außenumfang der ersten Teilkammer ist ein Sieb vorgesehen, das innerhalb einer Hohlzylindergeometrie oder einer Hohlprismageometrie liegt. Dabei sind die Hohlzylindergeometrie oder die Hohlprismageometrie achsparallel zur zylinderförmigen oder prismatische ersten Teilkammer und von einem minimalen Volumen, aber das Sieb vollständig umhülltend. Nicht als Bestandteil des Siebes angesehen werden dabei Bestandteile, die zur Befestigung des Siebes vorgesehen sind und zur Entgasung der Flüssigkeit nicht beitragen.

Unter Hohlprismageometrie wird das Volumen zwischen 2 koaxialen Prismamantelflächen von gleicher endlicher Länge verstanden.

Horizontal und in Strömungsrichtung angrenzend an die erste Teilkammer ist eine zweite Teilkammer mit horizontalem Trennsteg angeschlossen, der die zweite Teilkammer in eine obere Teilkammer mit Gasauslass und eine untere Teilkammer mit Flüssigkeitsablauf teilt.

Durch den erfindungsgemäßen Gasabscheider wird ein einfach herzustellender Gasabscheider bereitgestellt, der durch verschieden ausgebildete Siebe leicht anpassbar ist.

Vorteilhafte Ausgestaltungen ergeben sich durch die Merkmale der abhängigen Ansprüche.

In einer Verwendung des Gasabscheiders in Wärmeträgerkreisläufen von Wärmepumpen mit natürlichem brennbaren Kältemittel, insbesondere R290, wird dieser eingesetzt, um bei einem Störfall in den Wärmeträgerkreislauf eingedrungenes Kältemittel abzuscheiden. Ein solcher Störfall kann beispielsweise bei einem inneren Bruch des Wärmetauschers zwischen dem Kältekreis und dem wasserbasierten Wärmeträgerkreislauf auftreten. Dabei würde R290 in den Wärmeträgerkreislauf übertreten. Aufgrund der geringen Löslichkeit von R290 in Wasser wird der erfindungsgemäße Gasabscheider hierfür vorteilhaft verwendet. Durch die leichte Skalierbarkeit des Gasabscheiders kann dieser zudem leicht an unterschiedliche Wärmeträgerkreisläufe, wie sie je nach Installation bei der genannten Verwendung auftreten, angepasst werden.

Die Erfindung wird nun anhand der Figuren detailliert erläutert.

Es stellen dar:
Figur 1: einen Längsschnitt durch einen erfindungsgemäßen Gasabscheider
Figur 2: einen Längsschnitt durch eine alternative Ausführungsform eines erfindungsgemäßen Gasabscheider
Figur 3: einen Querschnitt durch ein Sieb
Figur 4: einen Querschnitt durch ein prismatisch Sieb
Figur 5: einen Längsschnitt durch ein Kegelstumpfmantel- förmiges Sieb
Figur 6: einen Querschnitt durch ein Plisseemanschetten-förmiges Sieb

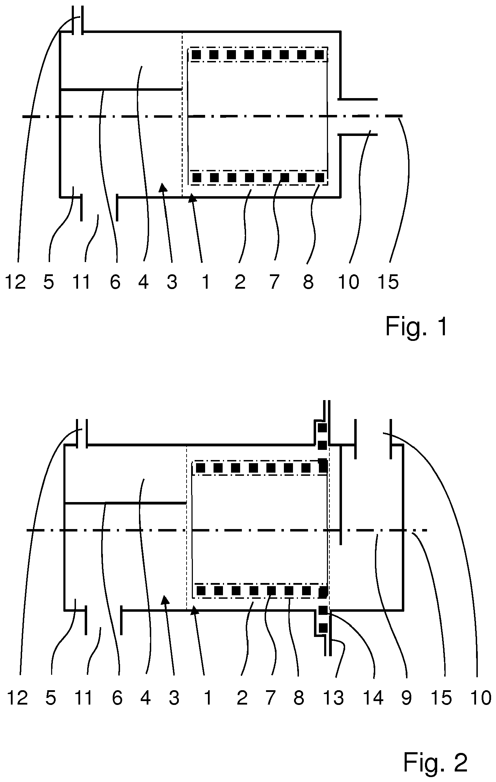

Figur 1 zeigt einen Längsschnitt durch einen erfindungsgemäßen Gasabscheider. Der horizontal ausgerichtete Gasabscheider umfasst eine Abscheidekammer 1, die sich in eine erste Teilkammer 2 und eine zweite Teilkammer 3 aufteilt. In der ersten Teilkammer 2 ist ein Sieb 7 vorgesehen. Dieses Sieb 7 wird von einer gedachten Hohlzylindergeometrie oder Hohlprismageometrie 8 anliegend umschlossen, wobei die Hohlzylindergeometrie ein minimales mögliches Volumen aufweist. Dabei hat die Geometrie abhängig von der Form des Siebes 7 als rotationsymmetrisches oder prismatisches Gebilde entweder die Form eines Hohlzylinders das oder die Form eines Hohlprismas. Durch einen Flüssigkeitseinlauf 10 kann Flüssigkeit in die Abscheidekammer 1 geleitet werden. Dabei ist der Flüssigkeit einlaufen 10 so angeordnet, dass die Flüssigkeit im wesentlichen ohne Drall zugeführt wird, dies bedeutet, dass der Vektor der zuströmenden Flüssigkeit keine Geschwindigkeitskomponente tangential zur Mittellinie 15 der Abscheidekammer 1 aufweist. Durch den Flüssigkeitseinlauf 10 kann die zu entgasende Flüssigkeit zunächst in die erste Teilkammer 2 einströmenden. Durch die mit der Querschnittsvergrößerung von dem Flüssigkeitseinlauf 10 zur ersten Teilkammer 2 verbundene Strömungsgeschwindigkeitsreduktion wird die Ausgasung bewirkt. Durch das im Außenbereich der ersten Teilkammer 2 konzentrisch angeordnete Sieb 7 wird zusätzlich die Bildung von Gasblasen begünstigt.

In Strömungsrichtung der zu entgasenden Flüssigkeit hinter der ersten Teilkammer 2 ist die zweite Teilkammer 3 angeordnet. Die zweite Teilkammer 3 ist horizontal durch einen Trennsteg 6 in eine obere Teilkammer 4 und eine untere Teilkammer 5 unterteilt. Aufgrund der geringeren Dichte sammeln sich die abgeschiedenen Gasblasen in der oberen Teilkammer 4 und können über einen Gasauslass 12 abgeführt werden. An dem Gasauslass 12 ist ein nicht dargestelltes Mittel angeordnet, dass das Austreten von Flüssigkeit verhindert. Dieses Mittel ist nicht Gegenstand der vorliegenden Erfindung und ist von gattungsgemäßen Gasabscheidern bekannt.

In der unteren Teilkammer 5 ist der Flüssigkeitsablauf 11 vorgesehen, durch den die zumindest teilweise von Gasblasen befreite Flüssigkeit aus der Abscheidekammer 1 abströmt.

Bevorzugt grenzt die zweite Teilkammer 3 direkt an die erste Teilkammer 2 an. Dabei kann das Sieb 7 direkt an dem Trennsteg 6 anliegen.

Das die Abscheidekammer 1 umschließenden Gehäuse des Gasabscheiders kann mehrteilig aufgebaut sein. So könnte eine Trennfuge zwischen der ersten Teilkammer und der zweiten Teilkammer vorgesehen sein. Zusätzlich oder alternativ kann eine Trennfuge an der zweiten Teilkammer 2 im Bereich des Flüssigkeitseinlaufs 10 vorgesehen sein, so dass ein demontierbarer Deckel mit dem Flüssigkeitseinlauf 10 gebildet wird, der die Montage des Siebes 7 ermöglicht und so leicht unterschiedliche Siebe 7 zum Einsatz kommen können. Zudem können leicht erste Teilkammern 2 unterschiedlicher Länge eingesetzt werden.

In Figur 2 ist eine alternative Ausführungsform mit zwei Varianten dargestellt, die unabhängig voneinander erfindungsgemäß einsetzbar sind.

Zwischen dem Flüssigkeitseinlauf 10 und der ersten Teilkammer 2 ist eine Einlaufkammer 9 vorgesehen, in die zunächst die zu entgasenden Flüssigkeit einläuft, bevor sie in die erste Teilkammer 2 einströmt.

Weiterhin ist in der Trennfuge auf der dem Flüssigkeitseinlauf 10 zugewandten Seite der ersten Teilkammer 2 ein Flansch 13 vorgesehen, in dem ein Kragen 14, der mit dem Sieb 7 verbunden ist, geklemmt ist.

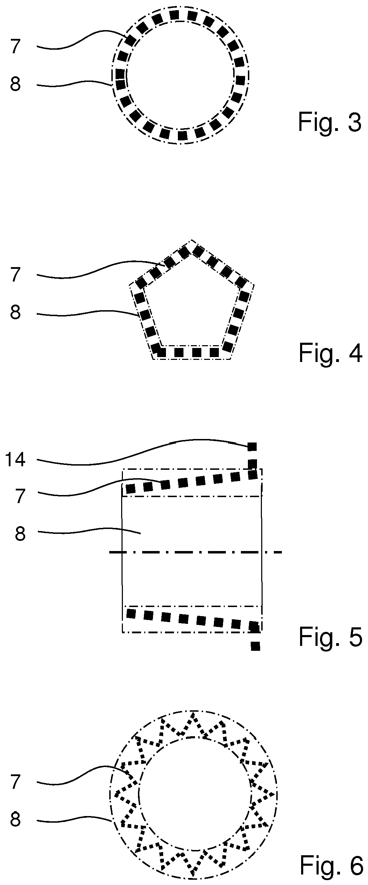

Figur 3 zeigt den Querschnitt des Siebes 7 aus Figur 1. In diesem Beispiel ist das Sieb 7 Zylindermantel-förmig und wird von einer Hohlzylindergeometrie 8 umhüllt.

Figur 4 zeigt den Querschnitt eines alternativen Siebes 7 aus Figur 1. In diesem Beispiel hat das Sieb 7 die Form des Mantels eines Prismas. In diesem Fall ist es von einer Hohlprismageometrie 8 umhüllt.

Figur 5 stellt im Längsschnitt wie in Figur 1 ein Kegelmantel-förmiges Sieb 7 dar. Dieses wird wiederum von einer Hohlzylindergeometrie 8 umhüllt. Zusätzlich ist das Sieb 7 mit einem Kragen 14 verbunden. Da der Kragen 14 nicht Bestandteil des Siebes 7 im Sinne der erfindungsgemäßen Definition ist, wird er nicht von der Hohlzylindergeometrie 8 mit umhüllt. Tatsächlich ist aber der Kragen 14 mit dem Sieb 7 verbunden oder der Kragen 14 und das Sieb 7 sind einstückig ausgeführt.

Figur 6 stellt ein Plisseemanschetten-förmiges Sieb 7 dar, das von der Hohlzylindergeometrie 8 umhüllt wird.

### Bezugszeichenliste

- 1: Abscheidekammer
- 2: erste Teilkammer
- 3: zweite Teilkammer
- 4: obere Teilkammer
- 5: untere Teilkammer
- 6: Trennsteg
- 7: Sieb
- 8: Hohlzylindergeometrie oder Hohlprismageometrie
- 9: Einlaufkammer
- 10: Flüssigkeitseinlauf
- 11: Flüssigkeitsablauf
- 12: Gasauslass
- 13: Flansch
- 14: Kragen
- 15: Mittellinie

## Patentansprüche

1. Gasabscheider für Wärmeträgerkreisläufe in Heizgeräten oder Wärmepumpen, umfassend eine Abscheidekammer (1), einen Flüssigkeitseinlauf (10) in die Abscheidekammer (1), einen Flüssigkeitsablauf (11) aus der Abscheidekammer (1), einen Gasauslass (12) aus der Abscheidekammer (1), wobei der Flüssigkeitseinlauf (10) so angeordnet ist, dass im Betrieb die Flüssigkeit ohne eine gezielte Zirkulation in die Abscheidekammer (1) einströmt, **dadurch gekennzeichnet, dass** in Strömungsrichtung hinter dem Flüssigkeitseinlauf (10) eine erste Teilkammer (2) mit einem eine koaxial zur Strömungsrichtung ausgerichtete Hohlzylindergeometrie oder Hohlprismageometrie (8) ausfüllenden Sieb (7) vorgesehen ist, dass in Strömungsrichtung horizontal unmittelbar hinter der ersten Teilkammer (2) eine zweite Teilkammer (3) mit horizontalem Trennsteg (6) vorgesehen ist, der die zweite Teilkammer (3) in eine obere Teilkammer (4) und eine untere Teilkammer (5) teilt, die zur ersten Teilkammer (2) hin geöffnet sind, dass der Gasauslass (12) in der oberen Teilkammer (4) und dass der Flüssigkeitsablauf (11) in der unteren Teilkammer (5) angeordnet ist.

2. Gasabscheider nach Anspruch 1, **dadurch gekennzeichnet, dass** die Hohlzylindergeometrie oder Hohlprismageometrie (8) sich über die Länge der ersten Teilkammer (2) erstreckt.

3. Gasabscheider nach Anspruch 1 oder 2, **dadurch gekennzeichnet, dass** das Verhältnis der äußeren zur inneren Grundfläche der Hohlzylindergeometrie oder Hohlprismageometrie (8) größer 3, bevorzugt größer 4, besonders bevorzugt größer 8 ist.

4. Gasabscheider nach einem der Ansprüche 1 bis 3, **dadurch gekennzeichnet, dass** das Sieb (7) mit einen radial nach außen abstehenden Kragen (14) außerhalb der Hohlzylindergeometrie oder Hohlprismageometrie (8) verbunden ist.

5. Gasabscheider nach einem der vorhergehenden Ansprüche, **dadurch gekennzeichnet, dass** das Verhältnis der mittleren Querschnittfläche der ersten Teilkammer (2) orthogonal zur Strömungsrichtung zu der äußeren Grundfläche der Hohlzylindergeometrie oder Hohlprismageometrie (8) kleiner 2 ist.

6. Gasabscheider nach einem der vorhergehenden Ansprüche, **dadurch gekennzeichnet, dass** das Sieb (7) am Trennsteg (6) anliegt.

7. Gasabscheider nach einem der Ansprüche 1 bis 6, **dadurch gekennzeichnet, dass** das Sieb (7) aus Streckmetall hergestellt ist.

8. Gasabscheider nach einem der Ansprüche 1 bis 6, **dadurch gekennzeichnet, dass** das Sieb (7) aus Drahtgewebe hergestellt ist.

9. Gasabscheider nach einem der vorhergehenden Ansprüche, **dadurch gekennzeichnet, dass** das Sieb (7) die Form einer Zylindermantelfläche aufweist.

10. Gasabscheider nach einem der vorhergehenden Ansprüche, **dadurch gekennzeichnet, dass** das Sieb (7) die Form der Mantelfläche eines Kegelstumpfes aufweist.

11. Gasabscheider nach einem der vorhergehenden Ansprüche, **dadurch gekennzeichnet, dass** das Sieb (7) die Form einer Plisseemanschette aufweist.

12. Gasabscheider nach einem der vorhergehenden Ansprüche, **dadurch gekennzeichnet, dass** der Trennsteg (6) oberhalb der Mitte, bevorzugt zwischen dem oberen und dem mittleren Drittel der zweiten Teilkammer (3) angeordnet ist.

13. Gasabscheider nach einem der vorhergehenden Ansprüche, wobei der Gasabscheider eine Mittelachse (15) ausweist, und wobei der Flüssigkeitseinlauf (10) rohrförmig ist, **dadurch gekennzeichnet, dass** die Mittelachse (15) des Gasabscheiders parallel zur Mittelachse des Flüssigkeitseinlaufs (10) ist.

14. Gasabscheider nach dem Oberbegriff des Anspruchs 13, **dadurch gekennzeichnet, dass** sich die Mittelachse (15) des Gasabscheiders und die Mittelachse des Flüssigkeitseinlaufs (10) sich schneiden.

15. Verwendung eines Gasabscheiders nach einem der Ansprüche 1 bis 14 in Wärmeträgerkreisläufen von Wärmepumpen mit natürlichem brennbaren Kältemittel, insbesondere R290, zum Abscheiden von bei einem Störfall in den Wärmeträgerkreislauf eingedrungenen Kältemittel.
